# NEUE EUROPÄISCHE PATENTSCHRIFT

(11) **EP 1 888 368 B2**
(45) Veröffentlichungstag und Bekanntmachung des Hinweises auf die Entscheidung über den Einspruch: **30.09.2015**
(45) Hinweis auf die Patenterteilung: 05.10.2011
(21) Anmeldenummer: 06742915.9
(22) Anmeldetag: 13.05.2006
(51) Int. Cl.: B60N 2/56, B60N 2/58

(54) **FAHRZEUGSITZ MIT EINER LUFTFÜHRUNGSSCHICHT UNTER EINEM OBERFLÄCHENBEZUG**
VEHICLE SEAL WITH AN AIR CONDUCTION LAYER BELOW A SURFACE COVERING
SIEGE DE VEHICULE COMPORTANT UNE COUCHE DE VENTILATION SOUS UN REVETEMENT DE SURFACE

(30) Priorität: 08.06.2005 DE 102005026541
(43) Veröffentlichungstag der Anmeldung: 20.02.2008
(73) Patentinhaber: Bayerische Motoren Werke Aktiengesellschaft, 80809 München (DE)
(72) Erfinder: WEIDNER, Sonja, 80339 München (DE); LEIN, Rudolf, 85221 Dachau (DE)
(86) Internationale Anmeldenummer: PCT/EP2006/004530
(87) Internationale Veröffentlichungsnummer: WO 2006/131189

(56) Entgegenhaltungen:
- EP-A- 0 834 421
- EP-A- 1 454 790
- EP-A1- 1 464 533
- EP-B1- 0 915 774
- WO-A-2005/037601
- WO-A-2006/045577
- DE-A1- 10 050 885
- DE-A1- 10 241 571
- DE-A1- 10 319 048
- DE-A1- 19 804 284
- DE-A1- 19 931 193
- DE-C1- 3 626 984
- DE-C1- 19 628 698
- DE-C2- 19 804 284
- DE-U1-202004 005 116
- US-A1- 2002 096 931
- US-B1- 6 224 150
- 01 September 2002, DEUSTSCHER TASCHENBUCH vol. WAHRING-BUCHFEIND: 'Universalworterbuch Rechtschreib', Seite 151

## Beschreibung

Die Erfindung betrifft einen Fahrzeugsitz mit einer Luftführungsschicht unter einem Oberflächenbezug nach dem Oberbegriff des Patentanspruchs 1.

Aus der US 2002/0096931 A1 ist bereits ein gattungsgemäßer Fahrzeugsitz bekannt, bei dem unter einem Oberflächenbezug eines Sitzkissens und / oder einer Rückenlehne eine Luftführungsschicht angeordnet ist.

Aus der US 6,224,150 B1 und aus der DE 196 26 698 C1 ist jeweils ein Fahrzeugsitz bekannt, bei dem unter einem Oberflächenbezug eines Sitzkissens und/oder einer Rückenlehne des Fahrzeugsitzes eine Luftführungsschicht angeordnet ist, die eine luftdurchlässige Deckschicht, eine Grundschicht und eine Vielzahl von die beiden Schichten verbindenden und auf Abstand haltenden Abstandshalter aufweist.

Ferner ist aus der EP 1 464 533 A1 ein Fahrzeugsitz bekannt, in den eine für die Luftführung und Luftverteilung eingearbeitete Luftführungsschicht unter einem atmungsaktiven Oberflächenbezug integriert ist. Die Luftführungsschicht weist eine luftdurchlässige Deckschicht, eine Grundschicht und eine Vielzahl von die beiden Schichten verbindenden und auf Abstand haltenden Abstandshalter auf, um die an einer beliebigen Stelle in das Luftführungsschicht eingeblasene Luft über die gesamte Fläche des Oberflächenbezugs möglichst gleichmäßig austreten zu lassen. So kann die beim Sitzen entstehende Feuchtigkeit verteilt und nach außen abgeführt werden.

Aufgabe der Erfindung ist es, den bekannten klimatisierbaren Fahrzeugsitz weiterzubilden.

Diese Aufgabe wird mit einem Fahrzeugsitz, bei dem unter einem Oberflächenbezug des Sitzkissens und / oder der Rückenlehne eine Luftführungsschicht angeordnet ist, mit den Merkmalen des Patentanspruchs 1 gelöst.

Erfindungsgemäß ist bei einem Fahrzeugsitz unter einem Oberflächenbezug eines Sitzkissens und / oder einer Rückenlehne des Fahrzeugsitzes eine Luftführungsschicht angeordnet, die eine luftdurchlässige Deckschicht, eine Grundschicht und eine Vielzahl von die beiden Schichten verbindenden und auf Abstand haltenden Abstandshalter hat. Beispielsweise kann die Luftführungsschicht aus einem Gewirke bestehen. Der Oberflächenbezug weist zumindest einen luftdurchlässigen Teilbereich und zumindest einen luftundurchlässigen Teilbereich auf. Beim Oberflächenbezug des Sitzkissens ist der zentrale Sitzbereich luftundurchlässig, während die seitlichen Stützwangen des Sitzkissens und / oder der vordere Bereich des Sitzkissens luftdurchlässig ist. In die Luftführungsschicht kann Luft eingeleitet werden, und / oder Luft kann durch die Luftführungsschicht hindurchströmen. Die Luft kann temperiert sein.

Wenn die Luftführungsschicht unterhalb des luftdurchlässigen Teilbereichs beispielsweise im Sommer mit kühler Luft durchströmt wird, kann diese durch den luftdurchlässigen Teilbereich des Oberflächenbezugs zumindest teilweise austreten. Ein Passagier, der auf diesem Fahrzeugsitz sitzt, wird diese austretende Luft als angenehm kühl empfinden. Schweiß und Wasserdampf im Bereich der austretenden Luft trocknen besonders schnell ab. Allerdings kann die Luft nur durch den Abschnitt des luftdurchlässigen Teilbereichs austreten, der nicht vom Passagier belegt ist. Bei einem sehr großflächigen luftdurchlässigen Teilbereich nimmt der Passagier unter Umständen die austretende Luft als unangenehmen Luftzug wahr. Der Luftaustritt wird jedenfalls unmittelbar vom Passagier wahrgenommen, sobald gekühlte Luft in die Luftführungsschicht eingeleitet wird.

Wenn die Luftführungsschicht unterhalb des luftundurchlässigen Teilbereichs beispielsweise im Sommer mit kühler Luft durchströmt wird, kühlt der Teilbereich des Oberflächenbezugs ab. Allerdings benötigt es eine gewisse Zeit nach dem Beginn des Durchströmens der Luftführungsschicht mit gekühlter Luft, bis sich der luftundurchlässige Teilbereich abgekühlt, und der Passagier einen kühlenden Effekt registriert. Dafür empfindet der Passagier in diesem Teilbereich keinen unangenehmen Luftzug durch austretende Luft.

Durch den erfindungsgemäßen Fahrzeugsitz mit einem luftdurchlässigen Teilbereich und einem luftundurchlässigen Teilbereich lassen sich die Vorteile kombinieren. So nimmt der Passagier durch die austretende Luft unmittelbar wahr, ob Luft durch die Luftführungsschicht durchströmt oder nicht. Andererseits kann der luftdurchlässige Teilbereich klein gehalten werden oder nur in bestimmten Abschnitten des Fahrzeugsitzes angeordnet werden, sodass keine unangenehm wahrnehmbare Zugluft entsteht. Es ist ein hoher Feuchtigkeitsabtransport durch die aus dem luftdurchlässigen Teilbereich austretende Luft gewährleistet. Der Oberflächenbezug kann sogar in Leder ausgeführt werden. Dazu kann das Leder im luftdurchlässigen Teilbereich eine hohe Anzahl kleiner Löcher aufweisen.

Die Luftführungsschicht sollte möglichst nahe an der Bezugoberfläche entlanggeführt werden. Dazu ist mindestens ein Einlass für das Medium und mindestens ein Auslass, zum Beispiel an den Kopfstützenhülsen der Rückenlehne, nötig. Wenn im Fahrzeugsitz Zwischenlagen, Sitzheizungen, Matten oder ähnliches notwendig sind, so sind diese zwischen Luftführungsschicht und Oberflächenbezug zu platzieren. Im luftdurchlässigen Teilbereich müssen diese Zwischenlagen ebenfalls luftdurchlässig ausgeführt sein. Zum Durchströmen der Luftführungsschicht ist normalerweise zumindest ein Lüfter erforderlich. Dieser Lüfter kann beispielsweise in der Ober- oder Unterseite eines Schaumteils des Sitzkissens oder der Rückenlehne unterhalb der Luftführungsschicht angeordnet werden. Das Schaumteil gibt dem Sitzkissen oder der Rückenlehne die gewünschte Form. Für den Lüfter kann in dem Schaumteil eine entsprechende Aussparung vorgesehen sein.

Bevorzugt ist die Luftführungsschicht in mehrere Abschnitte unterteilt, in die bei Bedarf jeweils unterschiedlich temperierte Luft eingeleitet werden kann. So kann ein stark erwärmter Fahrzeugsitz zunächst schnell abgekühlt werden, indem sowohl die Luftführungsschicht unter dem luftdurchlässigen Teilbereich als auch unter dem luftundurchlässigen Teilbereich mit gekühlter Luft durchströmt wird. Nach dem Absenken der Temperatur des Oberflächenbezugs auf ein erträgliches Maß wird anschließend nur mehr die Luftführungsschicht unterhalb des luftundurchlässigen Teilbereichs weiterhin durchströmt, um die Wunschtemperatur konstant zu halten. Dazu kann gezielt nur in einzelne Abschnitte Luft eingeleitet werden oder hindurchströmen.

Weitere vorteilhafte Ausgestaltungen sind Gegenstand von Unteransprüchen.

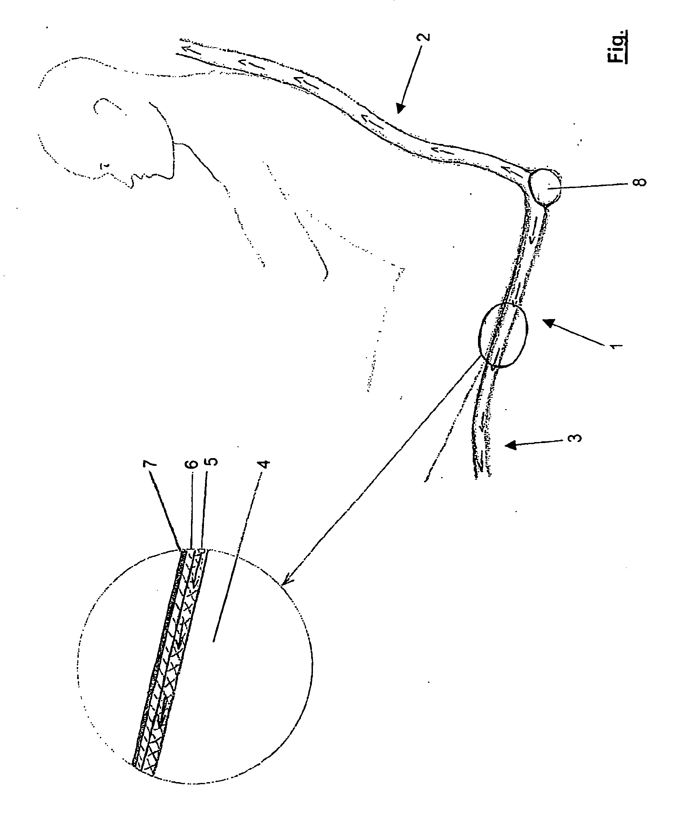

In der Zeichnung ist ein Ausführungsbeispiel der Erfindung dargestellt, anhand dessen die Erfindung im Folgenden näher beschrieben wird. Die einzige Figur zeigt in schematischer Darstellungsweise eine Seitenansicht eines klimatisierten Fahrzeugsitzes.

Der Fahrzeugsitz besteht im Wesentlichen aus einem Sitzkissen 1 und einer Rückenlehne 2, auf der eine nicht dargestellte Kopfstütze angebracht ist. Das Sitzkissen 1 wiederum besteht aus einem mittigen Sitzbereich, zwei seitlichen Stützwangen und einem vorderen Beinauflagebereich 3.

Das Sitzkissen 1 und die Rückenlehne 2 bestehen in allen Bereichen - wie in der vergrößerten Teilansicht erkennbar - aus einem Schaumteil 4, das dem Sitzkissen 1 bzw. der Rückenlehne 2 die grundlegende Form gibt, einer darauf angebrachten Luftführungsschicht 5, einer darüber angeordneten, luftdurchlässigen Sitzheizmatte 6 und abschließend einem Oberflächenbezug 7 aus Leder. Die Luftführungsschicht 5 besteht aus einer luftdurchlässigen Deckschicht, die dem Oberflächenbezug 7 zugewandt ist, einer Grundschicht und einer Vielzahl von die beiden Schichten verbindenden und auf Abstand haltenden Abstandshaltern. Zwischen Sitzkissen 1 und Rückenlehne 2 ist ein Lüfter 8 angebracht, der klimatisierte Luft in die Luftführungsschicht 5 im Sitzkissen 1 und in der Rückenlehne 2 blasen kann.

Der Oberflächenbezug 7 aus Leder weist im Bereich der seitlichen Stützwangen und des vorderen Beinauflagebereichs 3 des Sitzkissens 1 eine Vielzahl gleichmäßig verteilter kleiner Löcher auf, sodass Luft aus der Luftführungsschicht 5 durch den Oberflächenbezug 7 in diesen Bereichen ausströmen kann. Der Oberflächenbezug 7 im verbleibenden zentralen Sitzbereich des Sitzkissens 1 dagegen ist luftundurchlässig, das Leder weist in diesem Bereich keine Lochung auf. Wenn nun die Luftführungsschicht 5 mit temperierter Luft durchströmt wird, kann diese zumindest teilweise in den Bereichen mit dem gelochten Oberflächenbezug 7 durch die Löcher austreten.

Im Sommer kann beispielsweise gekühlte Luft in die Luftführungsschicht 5 im Sitzkissen 1 eingeleitet werden. Diese gekühlte Luft kann zumindest teilweise durch die gelochten Bereiche des Oberflächenbezugs 7 austreten. Ein Passagier auf dem Fahrzeugsitz spürt so unmittelbar nach dem Einleiten der Luft in die Luftführungsschicht 5 einen angenehm kühlenden Luftzug, der Schweiß und sonstige Feuchtigkeit trocknet. Der nicht luftdurchlässige Bereich des Oberflächenbezugs 7 im zentralen Bereich des Sitzkissens 1 wird durch die darunter durchströmende gekühlte Luft ebenfalls gekühlt. Durch diese Aufteilung des Oberflächenbezugs 7 in luftdurchlässige und luftundurchlässige Bereiche erhält der Passagier unmittelbar nach dem Einschalten des Lüfters 8 durch die aus den Löchern austretende Luft eine Rückmeldung, dass der Lüfter 8 läuft. Der durch die austretende Luft erzeugte Luftstrom wird als angenehm kühlend empfunden. Andererseits ist der Luftstrom aufgrund der nur in einzelnen Bereichen angeordneten Löcher so gering, dass er nicht als unangenehm zugig wahrgenommen wird.

Auch der Oberflächenbezug 7 der Rückenlehne 2 ist in unterschiedliche Teilbereiche aufgeteilt. So weist der Oberflächenbezug 7 im Bereich der seitlichen Stützwangen eine Vielzahl kleiner Löcher auf, sodass er in diesem Bereich luftdurchlässig ist. Der mittlere Bereich des Oberflächenbezugs 7 der Rückenlehne 2 dagegen ist luftundurchlässig. Wenn nun die darunter liegende Luftführungsschicht 5 mit gekühlter Luft durchströmt wird, tritt diese Luft zumindest teilweise durch die vielen kleinen Löcher im Oberflächenbezug 7 im Bereich der seitlichen Stützwangen aus. Der mittlere Bereich der Rückenlehne 2 wird durch die in der darunter liegenden Luftführungsschicht 5 durchströmende Luft gekühlt.

Bei einem Oberflächenbezug 7 aus einem Stoff lassen sich ebenfalls luftdurchlässige und luftundurchlässige Teilbereiche realisieren. Der Stoff ist dazu so gearbeitet, dass er zumindest etwas luftdurchlässig ist. Im luftundurchlässigen Teilbereich kann eine luftundurchlässige Schicht oder Folie auf der Unterseite des Stoffes aufgebracht werden. Dies hat den großen Vorteil, dass die einzelnen Teilbereiche das optische Erscheinungsbild des Oberflächenbezugs nicht beeinträchtigen, da die in einzelnen Teilbereichen darunter angebrachten Folien nicht sichtbar sind.

Durch die Aufteilung des Sitzkissens 1 und der Rückenlehne 2 in teilweise luftdurchlässige und teilweise luftundurchlässige Teilbereiche bekommt der Passagier auf dem Fahrzeugsitz einerseits eine schnelle Rückmeldung nach dem Einschalten des Lüfters 8 und der Fahrzeugsitz kann durch die durch die Löcher ausströmende Luft schnell gekühlt werden, andererseits empfindet der Passagier die austretende Luft nicht als unangenehmen Luftzug. Darüber hinaus werden alle Bereiche durch die hindurchströmende Luft in der Luftführungsschicht 5 gleichmäßig gekühlt.

## Patentansprüche

1. Fahrzeugsitz, bei dem unter einem Oberflächenbezug (7) eines Sitzkissens (1) und / oder einer Rückenlehne (2) des Fahrzeugsitzes eine Luftführungsschicht (5) angeordnet ist, die eine luftdurchlässige Deckschicht, eine Grundschicht und eine Vielzahl von die beiden Schichten verbindenden und auf Abstand haltenden Abstandshalter aufweist, **dadurch gekennzeichnet, dass** beim Oberflächenbezug (7) des Sitzkissens (1) der zentrale Sitzbereich luftundurchlässig ist, während die seitlichen Stützwangen des Sitzkissens (1) und / oder der vordere Bereich des Sitzkissens (1) luftdurchlässig sind.

2. Fahrzeugsitz nach Anspruch 1, **dadurch gekennzeichnet, dass** in die Luftführungsschicht (5) Luft eingeleitet werden kann oder durch die Luftführungsschicht (5) hindurchströmen kann.

3. Fahrzeugsitz nach Anspruch 2, **dadurch gekennzeichnet, dass** die Luftführungschicht (5) in mehrere Abschnitte unterteilt ist, in die bei Bedarf jeweils unterschiedlich temperierte Luft eingeleitet werden kann oder durch die jeweils unterschiedlich temperierte Luft hindurchströmen kann.

4. Fahrzeugsitz nach Anspruch 3, **dadurch gekennzeichnet, dass** gezielt nur in einzelne Abschnitte Luft eingeleitet werden oder hindurchströmen kann.

5. Fahrzeugsitz nach einem der vorhergehenden Ansprüche, **dadurch gekennzeichnet, dass** der Oberflächenbezug (7) im luftdurchlässigen Bereich aus einem Stoff oder einem Leder besteht.

6. Fahrzeugsitz nach einem der vorhergehenden Ansprüche, **dadurch gekennzeichnet, dass** der Oberflächenbezug (7) im luftundurchlässigen Teilbereich aus demselben Material wie im luftdurchlässigen Teilbereich besteht, auf das zusätzlich eine luftundurchlässige Schicht oder Folie aufgebracht ist.

7. Fahrzeugsitz nach einem der vorhergehenden Ansprüche, **dadurch gekennzeichnet, dass** beim Oberflächenbezug (7) der Rückenlehne (2) der mittlere Bereich luftundurchlässig ist, während die seitlichen Stützwangen der Rückenlehne (2) luftdurchlässig sind.

## Claims

1. A seat in a vehicle wherein an air-circulating layer (5) is disposed under a surface coating (7) of a cushion (1) and/or a seat back (2) and comprises an air-permeable cover layer, a base layer and a number of spacers connecting the two layers and holding them apart, **characterised in that** in the case of the surface coverings (7) of the cushion (1) the central seat region is impermeable to air whereas the supporting side cheeks of the cushion (1) and/or the front region of the cushion (1) are permeable to air.

2. A seat according to claim 1, **characterised in that** air can be introduced into the air-circulating layer (5) or flow through the air-circulating layer (5).

3. A seat according to claim 2, **characterised in that** the air-circulating layer (5) is divided into a number of portions into which or through which variously-tempered air can be introduced or flow.

4. A seat according to claim 3, **characterised in that** air can be introduced into or flow in controlled manner, in individual portions only.

5. A seat according to any of the preceding claims, **characterised in that** in the air-permeable region the surface covering (7) is made of material or leather.

6. A seat according to any of the preceding claims, **characterised in that** in the air-impermeable part the surface covering (7) is made of the same material as in the air-permeable part, which is additionally covered by an air-impermeable sheet or foil.

7. A seat according to any of the preceding claims, **characterised in that** in the case of the surface covering (7) of the seat back (2), the middle region is impermeable to air whereas the supporting side cheeks of the back (2) are permeable to air.

## Revendications

1. Siège de véhicule muni d'une couche de guidage d'air (5) sous un revêtement de surface (7) d'un coussin de siège (1) et/ou de dossier (2) du siège de véhicule, cette couche de guidage d'air ayant une couche de couverture perméable à l'air, une couche de base et plusieurs organes d'écartement reliant les deux couches et les maintenant écartées,
siège de véhicule **caractérisé en ce que**
la zone d'assise centrale du revêtement de surface (7) du coussin de siège (1) est imperméable à l'air, alors que les zones d'appui latérales du coussin de siège (1) et/ou la zone avant du coussin de siège (1), sont perméables à l'air.

2. Siège de véhicule selon la revendication 1,
**caractérisé en ce qu'**
on introduit de l'air dans la couche de guidage d'air (5) ou on fait passer de l'air à travers la couche de guidage d'air (5).

3. Siège de véhicule selon la revendication 2,
**caractérisé en ce que**
la couche de guidage d'air (5) est subdivisée en plusieurs segments dans lesquels le cas échéant, on peut introduire différemment, de l'air tempéré, ou qui peuvent être traversés par de l'air à des températures différentes.

4. Siège de véhicule selon la revendication 3,
**caractérisé en ce que**
de manière ciblée, on n'introduit de l'air que dans certains segments ou on fait passer de l'air dans certains segments.

5. Siège de véhicule selon l'une des revendications précédentes,
**caractérisé en ce que**
le revêtement de surface (7) dans la zone perméable à l'air, est en un tissu ou en cuir.

6. Siège de véhicule selon l'une des revendications précédentes,
**caractérisé en ce que**
le revêtement de surface (7) dans la zone partielle imperméable à l'air, est réalisé dans la même matière que la zone partielle perméable à l'air et sur laquelle on a appliqué, en plus, une couche ou un film imperméable à l'air.

7. Siège de véhicule selon l'une des revendications précédentes,
**caractérisé en ce que**
le revêtement de surface (7) du dossier (2) au niveau de la zone médiane, est imperméable à l'air, alors que les zones d'appui latérales du dossier (2) sont perméables à l'air.
